# EUROPÄISCHE PATENTSCHRIFT

(11) **EP 0 891 395 B1**
(45) Veröffentlichungstag und Bekanntmachung des Hinweises auf die Patenterteilung: **06.09.2000**
(21) Anmeldenummer: 97918089.0
(22) Anmeldetag: 01.04.1997
(51) Int. Cl.: C09B 33/22, C09B 45/24

(54) **TRISAZOFARBSTOFFE**
TRISAZO DYES
COLORANTS TRISAZO

(30) Priorität: 03.04.1996 DE 19613315
(43) Veröffentlichungstag der Anmeldung: 20.01.1999
(73) Patentinhaber: BASF AKTIENGESELLSCHAFT, 67056 Ludwigshafen (DE)
(72) Erfinder: SCHOLZ, Gerhard, D-67126 Hochdorf-Assenheim (DE); LAMM, Gunther, D-67454 Hassloch (DE)
(86) Internationale Anmeldenummer: EP9701616
(87) Internationale Veröffentlichungsnummer: WO9738052

(56) Entgegenhaltungen:
- EP-A- 0 068 245
- DE-A- 3 428 836
- US-A- 2 220 397
- US-A- 2 259 734
- US-A- 2 259 735
- US-A- 2 259 736

## Beschreibung

Gegenstand der vorliegenden Erfindung sind Trisazofarbstoffe der allgemeinen Formel I 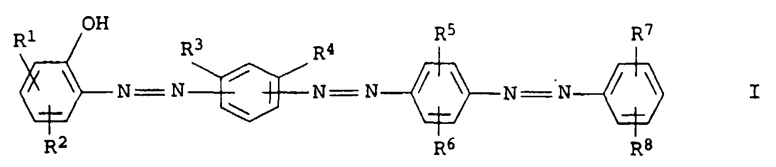 in freier Form oder in Form ihrer Metallsalze sowie als Übergangsmetallkomplexe, wobei die Variablen die folgenden Bedeutungen haben:
- R¹: Wasserstoff, C₁-C₄-Alkyl, Halogen, Nitro, Hydroxysulfonyl, Sulfamoyl, Mono- oder Di-C₁-C₄-alkylsulfamoyl, C₁-C₄-Alkylsulfonyl oder C₁-C₄-Alkoxysulfonyl,
- R²: Wasserstoff, Halogen, Nitro oder Hydroxysulfonyl, wobei mindestens einer der Reste R¹ oder R² Nitro ist,
- R³,R⁴: unabhängig voneinander jeweils Hydroxy oder Amino,
- R⁵: Wasserstoff, C₁-C₄-Alkyl, Hydroxysulfonyl, Sulfamoyl, Mono- oder Di-C₁-C₄-alkylsulfamoyl, C₁-C₄-Alkylsulfonyl, C₁-C₄-Alkoxysulfonyl oder Carboxyl,
- R⁶: Wasserstoff oder C₁-C₄-Alkyl,
- R⁷: Wasserstoff, Hydroxysulfonyl, Sulfamoyl, Mono- oder Di-C₁-C₄-alkylsulfamoyl, C₁-C₄-Alkylsulfonyl, C₁-C₄-Alkoxysulfonyl, SO₂N(CH₂COOH)₂ oder Carboxyl,
- R⁸: Wasserstoff, Hydroxy, C₁-C₄-Alkoxy, Halogen oder Nitro,
mit der Maßgabe, daß mindestens einer der beiden Reste R⁵ und R⁷ COOH oder SO₃H bedeuten, wobei, wenn R⁵ oder R⁷ für SO₃H steht, der andere dieser beiden Reste COOH oder R³ und/oder R⁴ Amino oder R¹ Wasserstoff oder R⁶ alkyl bedeuten, sowie deren Verwendung zum Färben von Leder, Textilfasern und Papier.

Saure Trisazofarbstoffe mit braunen Farbtönen sind seit langem bekannt und werden z.B. zum Färben von Leder, Textilien und Papier verwendet (s. z.B.: DE-OS 22 38 159, US-2 259 734 und WO 81/03179). Die Farbstoffe wurden entweder in freier Form oder in Form von Metallkomplexen, insbesondere als Kupferkomplexe, eingesetzt. Die Dokumente US-A-2 220 397, US-A-2 259 735 sowie US 2 259 736 beschreiben ebenfalls Farbstoffe, die den anmeldungsgemäßen strukturell nahe kommen.

Die bekannten Farbstoffe lassen jedoch hinsichtlich ihrer Lichtechtheit, Wasch- und Schweißechtheit und ihrem Färbeverhalten, z.B. hinsichtlich der Flottenauszehrung, zu wünschen übrig.

Aufgabe der vorliegenden Erfindung war es daher, neue Trisazofarbstoffe zur Verfügung zu stellen, die hinsichtlich ihrer Lichtechtheit, ihrer Wasch- und Schweißechtheit und/oder ihrem Färbeverhalten den bekannten Farbstoffen überlegen sind.

Demgemäß wurden die eingangs genannten Trisazofarbstoffe der allgemeinen Formel I gefunden.

Als R¹, R⁵ und R⁶ kommen z.B. die C₁-C₄-Alkylreste Methyl, Ethyl, n-Propyl, Isopropyl, n-Butyl, Isobutyl, sec.-Butyl und tert.-Butyl in Betracht. Bevorzugte Alkylreste sind Methylreste.

Als R¹, R⁵ und R⁷ kommen z.B. C₁-C₄-Mono- oder Dialkylsulfamoylreste, C₁-C₄-Alkylsulfonylreste und C₁-C₄-Alkoxysulfonylreste mit den genannten Alkylresten in Betracht.

Als R⁸ kommen z.B. C₁-C₄-Alkoxyreste mit den genannten Alkylgruppen in Betracht.

Als R¹, R² und R⁸ kommen die Halogene Fluor, Chlor, Brom und Jod, bevorzugt Chlor und Brom, in Betracht.

Bevorzugte Reste R¹ und R² sind Wasserstoff, Hydroxysulfonyl und Nitro, insbesondere Wasserstoff und Nitro, wobei mindestens einer der Reste R¹ oder R², vorzugsweise beide Nitrogruppen sind. Die Reste R¹ und R² stehen bevorzugt in den m-Positionen zur Diazogruppe.

Die Reste R³ und R⁴ sind vorzugsweise gleiche Reste. Die an denselben Phenylring gekuppelten Diazogruppen stehen bevorzugt beide in den o-Positionen zu ihnen, so daß der Phenylring 1,2,4,5 substituiert ist.

Bevorzugte Reste R⁵ sind COOH, SO₃H, Methyl und Wasserstoff, wobei die Carboxylgruppe besonders bevorzugt ist.

Bevorzugte Reste R⁶ sind Wasserstoff und Methyl. Wasserstoff ist der bevorzugte Rest R⁶ in Kombination mit COOH, SO₃H oder Wasserstoff als Rest R⁵. R⁶ ist bevorzugt dann Methyl, wenn auch R⁵ Methyl bedeutet.

Bevorzugte Reste R⁷ sind SO₃H und COOH.

Besonders bevorzugte Farbstoffe sind solche, bei denen entweder R⁵ oder R⁷ eine Carboxylgruppe bedeutet.

Bevorzugte Reste R⁸ sind Wasserstoff und Hydroxy.

Die erfindungsgemäßen Trisazofarbstoffe können in freier Form oder in Form ihrer Metallsalze verwendet werden.

Geeignete Übergangsmetalle zur Komplexbildung mit den Trisazofarbstoffen sind besonders die Elemente der 6., 7. und 8. Nebengruppe des Periodensystems sowie Kupfer, insbesondere Chrom, Eisen, Kobalt, Nickel und Kupfer, wobei Eisenkomplexe besonders bevorzugt sind.

Besonders bevorzugt sind die Eisen-Komplexe der folgenden Trisazofarbstoffe, die durch Umsetzung von einem Mol-Äquivalent Farbstoff mit 0,5 bis 2 Mol-Äquivalenten Eisensalz erhalten werden.

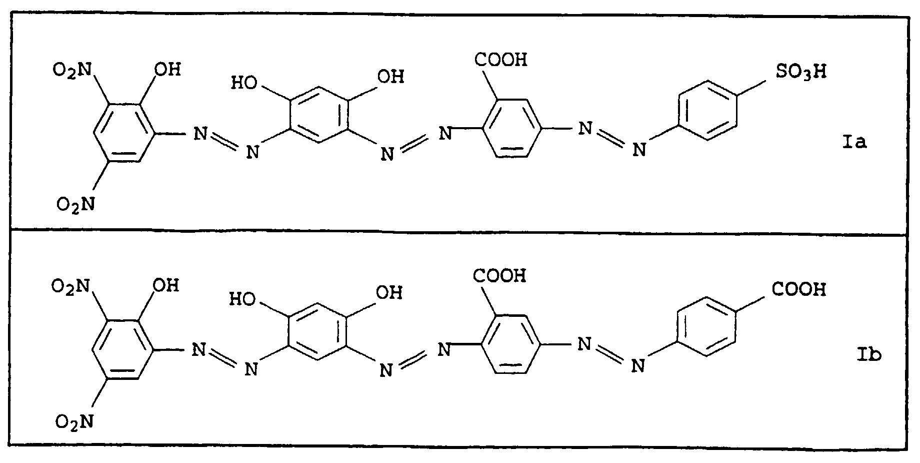

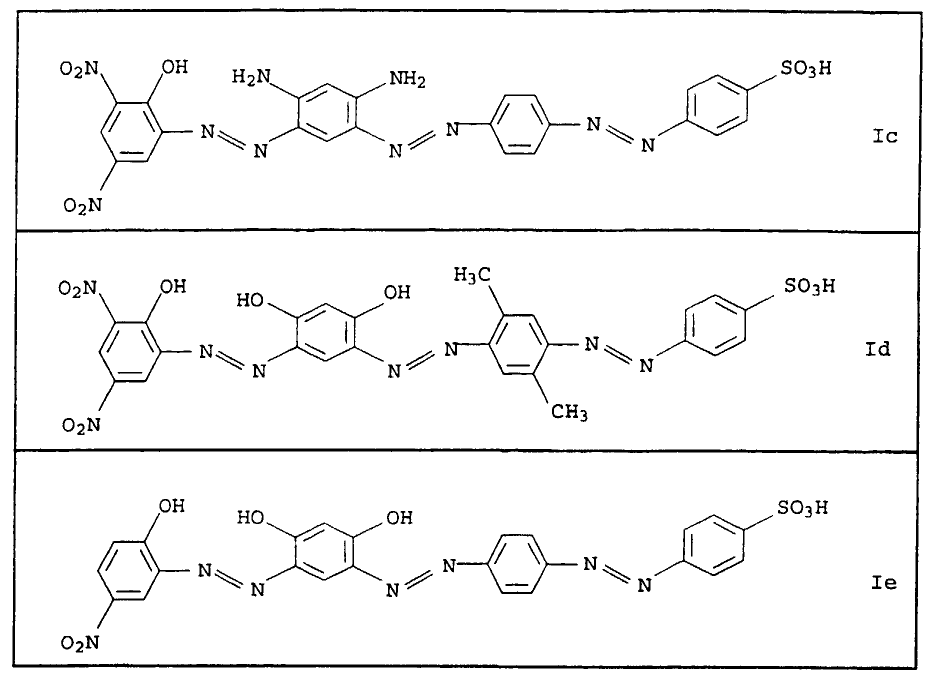

Bevorzugt werden Eisenkomplexe der Farbstoffe Ia-d mit einer 1:1-Stöchiometrie sowie die Eisenkomplexe der Farbstoffe Ia und b mit einer 2:1-Stöchiometrie der Einsatzstoffe (Eisensalz/Farbstoff).

Geeignete Eisensalze sind wasserlösliche Eisen-II-salze wie Eisen-II-chlorid, Eisen-II-sulfat, Eisen-II-carbonat und Eisen-II-acetat und bevorzugt Eisen-III-salze wie Eisen-III-sulfat, Eisen-III-chlorat, Eisen-III-nitrat und insbesondere Eisen-III-chlorid.

Die Farbstoffe der Formel I können in an sich bekannter Weise hergestellt werden, beispielsweise indem man ein Aminophenol der allgemeinen Formel II 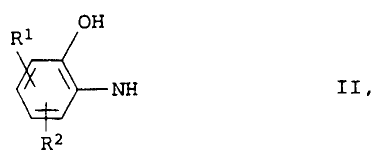 in der R¹ und R² die oben genannte Bedeutung haben, diazotiert und mit einer Verbindung der allgemeinen Formel III 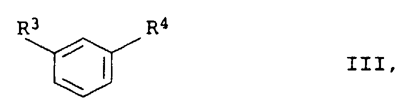 in der R³ und R⁴ die oben genannte Bedeutung haben, kuppelt. Die resultierende Monoazoverbindung IV 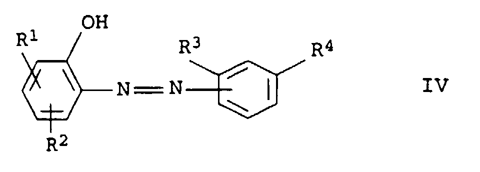 setzt man mit dem Diazoniumsalz einer Aminokomponente V 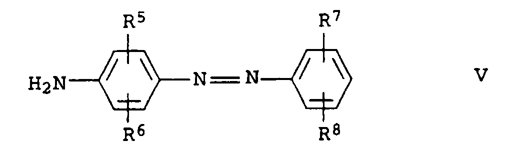 um, in der R⁵, R⁶, R⁷ und R⁸ die oben angegebene Bedeutung haben, wobei man die Farbstoffe der allgemeinen Formel I erhält.

Die Aminoazoverbindungen V erhält man z.B. durch Umsetzung des Diazoniumsalzes eines Amins VI 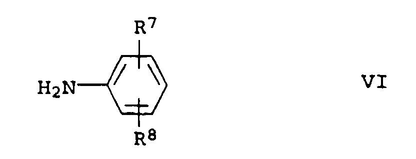 mit einer Verbindung VII 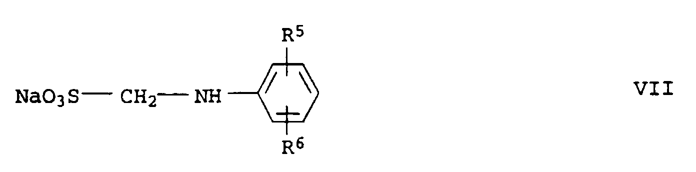 und anschließende Verseifung der resultierenden Monoazoverbindung zur Aminoazoverbindung V.

Die Reihenfolge der Kupplungsreaktionen kann auch verändert werden. Die gewünschtenfalls anschließende Metallisierung des Trisazofarbstoffs erfolgt nach bekannten Methoden.

Die erfindungsgemäßen Farbstoffe zeichnen sich durch hohe Lichtechtheit, gute Wasch- und Schweißechtheiten insbesondere gegenüber Verfärbungen von Baumwollgeweben und gute Färbeeigenschaften, z.B. gute Flottenauszehrung, bei Lederfärbungen aus.

Die Farbstoffe eignen sich besonders zum Färben von Leder, Textilfasern und Papier. Zur Lederfärbung kommen alle Ledersorten wie Narben- und Rauhleder, Chromleder, nachgegerbte Leder oder Velourleder von Ziege, Schaf, Rind und Schwein in Betracht. Unter den Textilfasern sind besonders Baumwolle, Wolle und Polyamidfasern zu nennen.

### Beispiele

### Beispiel 1

### Herstellung des Trisazofarbstoffs

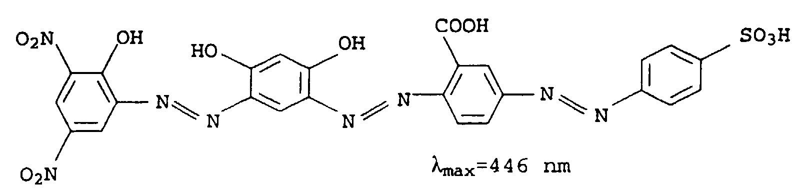

a) 25 g (0,182 mol) Natriumformaldehydbisulfit wurden bei 50°C in 6 ml Wasser gelöst. Zu der Lösung wurden 14,3 g (0,104 mol) Anthranilsäure gegeben. Die Mischung wurde 4 Stunden bei 95°C gerührt. Dann wurden bei 25°C 17,3 g (0,1 mol) Sulfanilsäure, die vorher in üblicher Weise diazotiert wurde, zugegeben, wobei der pH-Wert mit Natriumhydrogencarbonat bei 6,0 gehalten wurde. Es wurde bei 0 - 5°C für 3 Stunden nachgerührt. Dann wurden 25 ml 50 gew.-%ige Natronlauge zugegeben und 4 Stunden auf 90°C erhitzt. Nach Abkühlen auf 20°C wurde der pH-Wert mit Salzsäure auf 4,0 eingestellt, die Suspension wurde 2 Stunden nachgerührt und das Produkt abgesaugt.
b) 22,1 g (0,1 mol) Natriumpicramat wurden in üblicher Weise diazotiert und bei pH 9,0 auf 10,4 g (0,095 mol) Resorcin gekuppelt. Zu der Suspension wurden bei pH 8-9 das Diazoniumsalz von 32,1 g (0,1 mol) des Produktes von a) gegeben. Nach beendeter Kupplung wurde der pH-Wert mit verdünnter Salzsäure auf 6,0 eingestellt. Bei 60°C wurden dann 16,1 g (0,1 mol) wasserfreies Eisen-III-chlorid zugegeben und bei pH 4,0 1 Stunde gerührt. Der ausgefallene Trisazofarbstoff wurde abgesaugt und bei 60°C getrocknet. Es wurden 136 g eines NaCl-haltigen Feststoffs erhalten.

In analoger Weise wurden Eisenkomplexe von den in der folgenden Tabelle aufgeführten Farbstoffen, ausgehend von x Moläquivalent Eisen und y Moläquivalenten Farbstoff hergestellt.

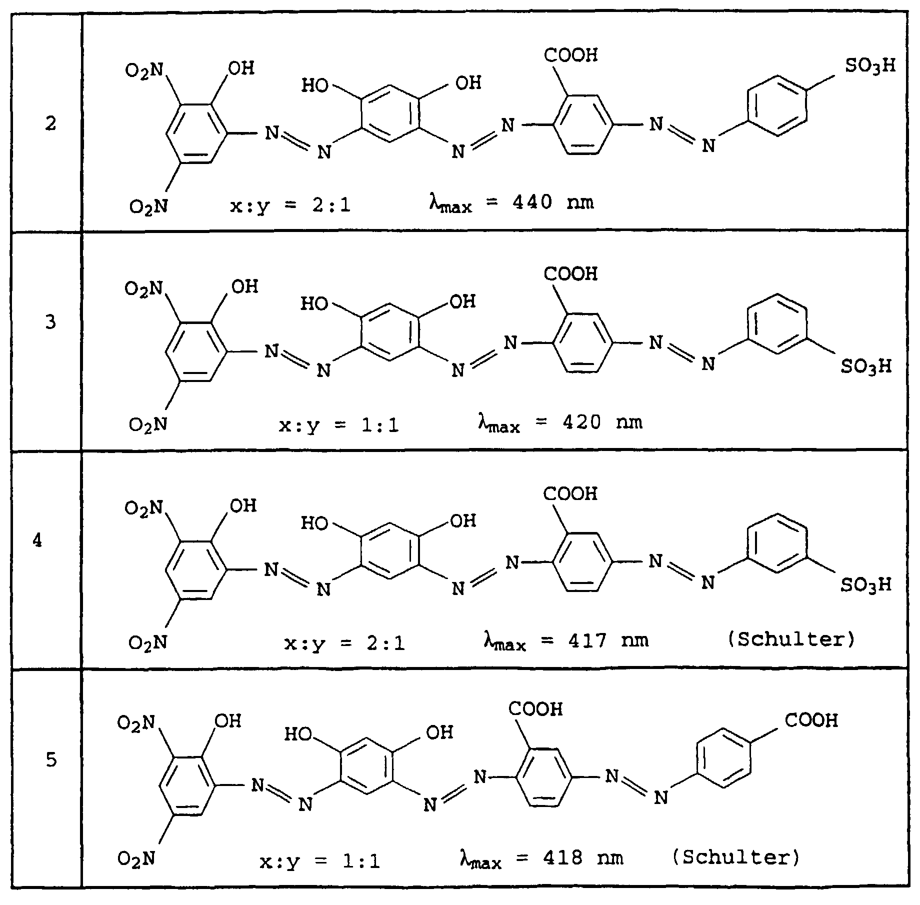

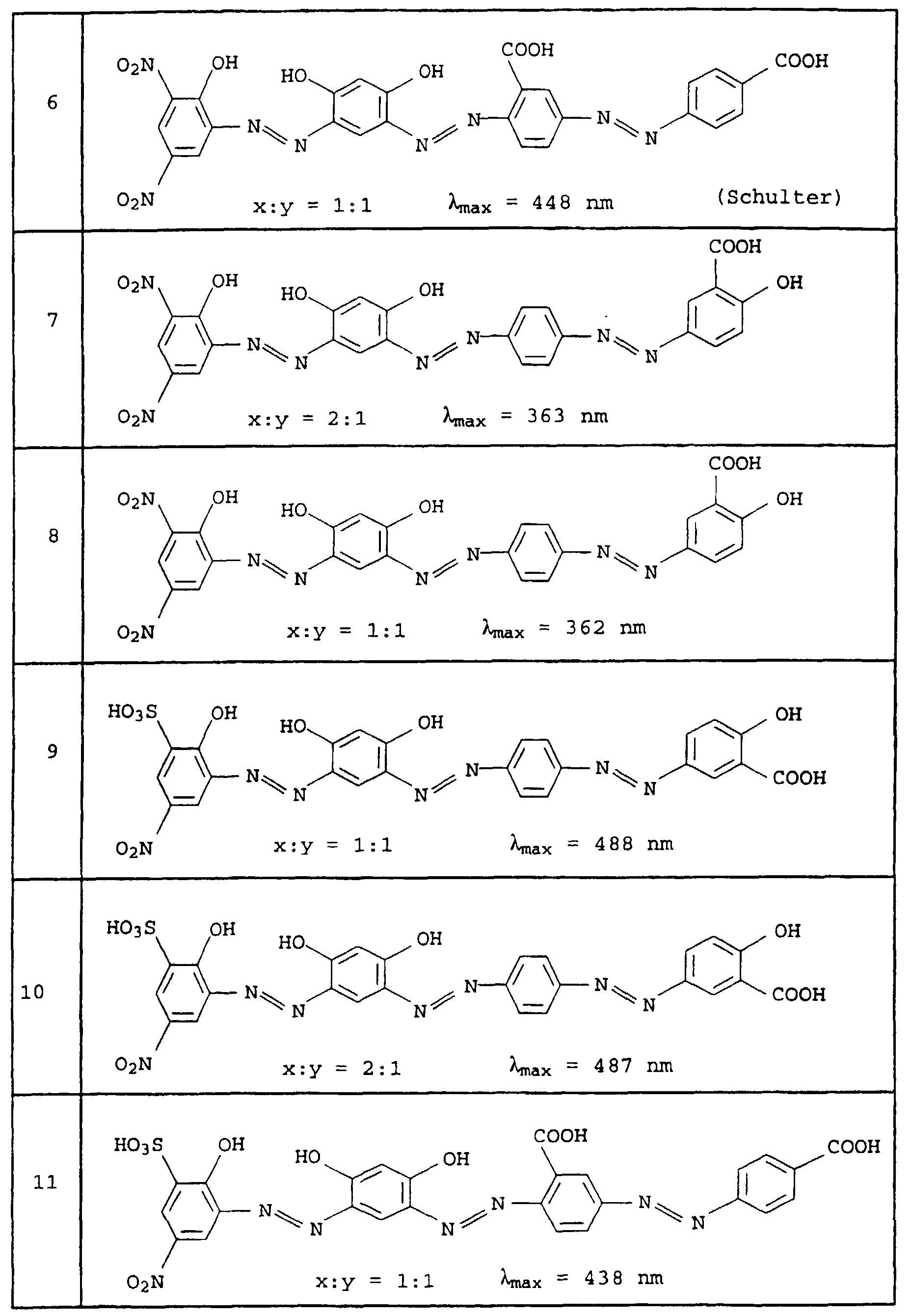

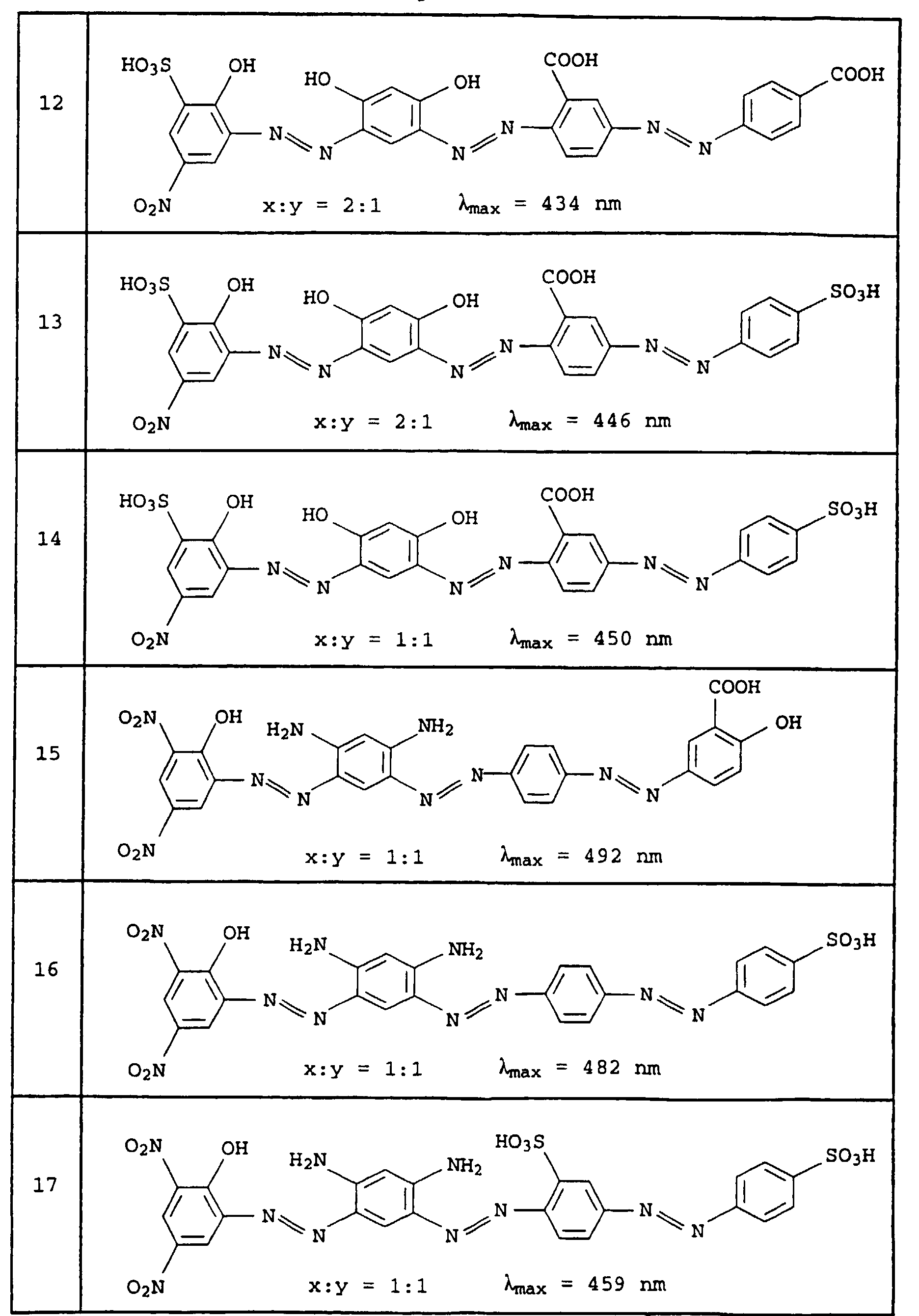

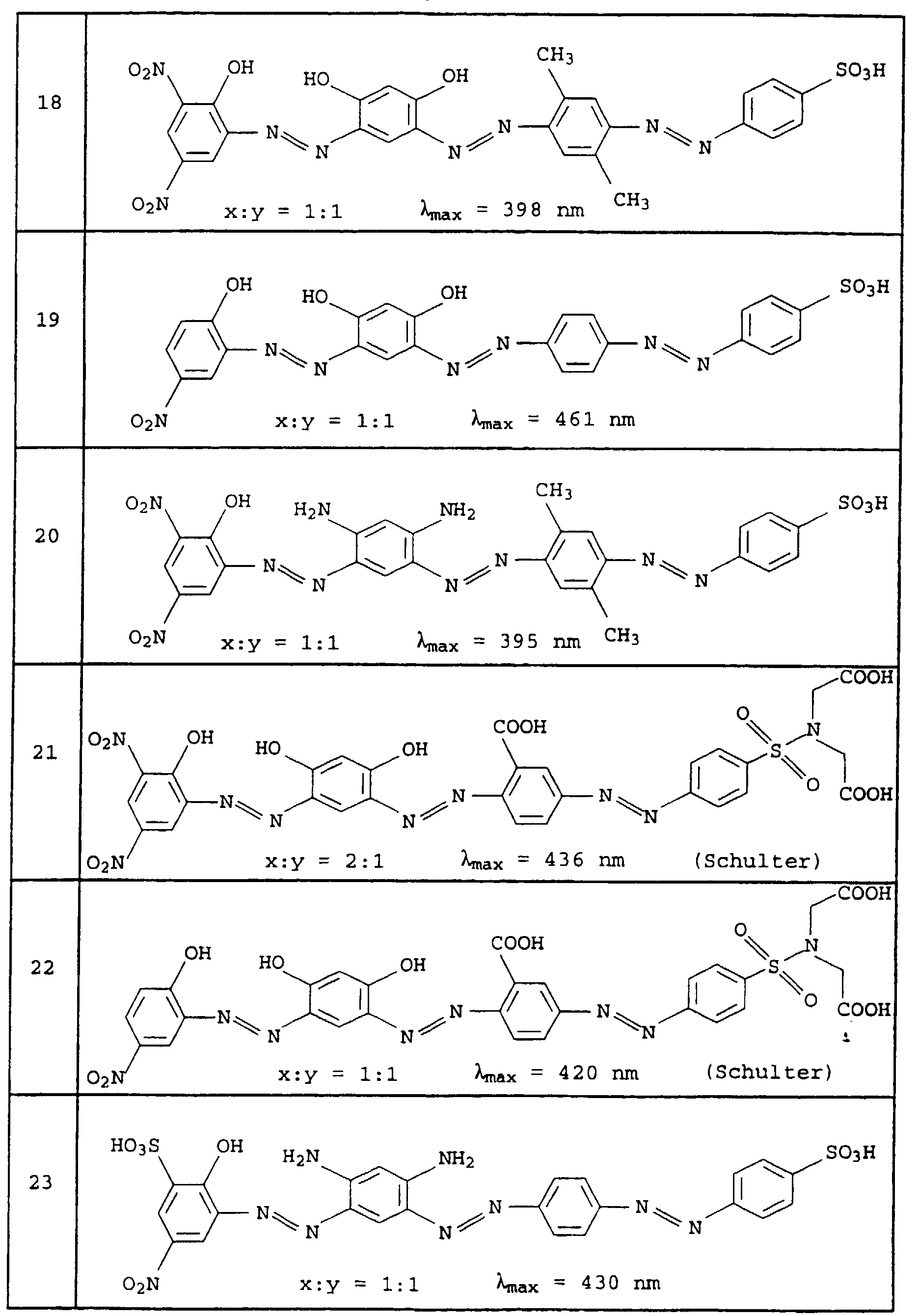

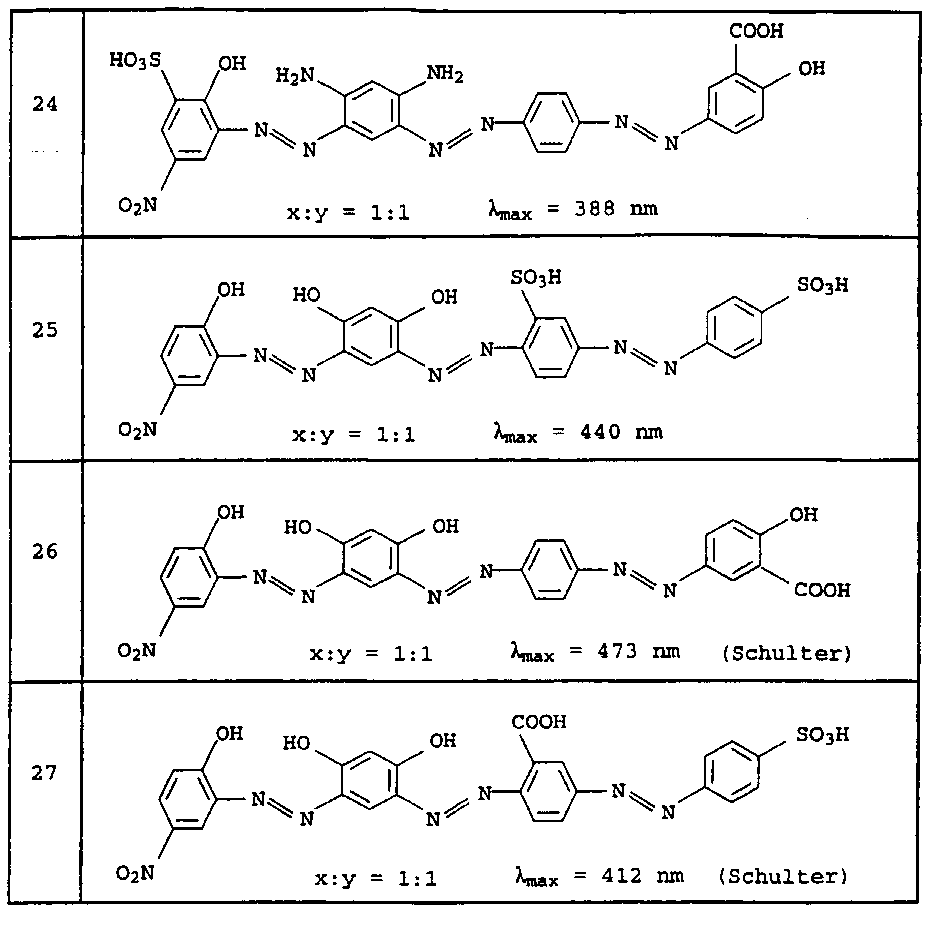

## Patentansprüche

1. Trisazofarbstoffe der allgemeinen Formel I 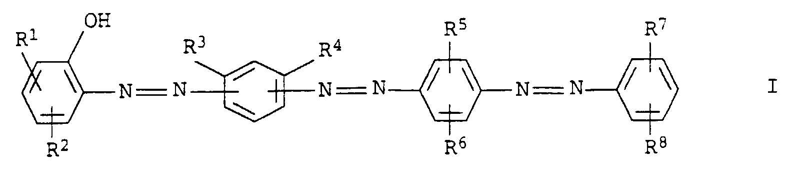 in freier Form oder in Form ihrer Metallsalze sowie als Übergangsmetallkomplexe, wobei die Variablen die folgenden Bedeutungen haben:
R¹ Wasserstoff, C₁-C₄-Alkyl, Halogen, Nitro, Hydroxysulfonyl, Sulfamoyl, Mono- oder Di-C₁-C₄-alkylsulfamoyl, C₁-C₄-Alkylsulfonyl oder C₁-C₄-Alkoxysulfonyl,
R² Wasserstoff, Halogen, Nitro oder Hydroxysulfonyl, wobei mindestens einer der Reste R¹ oder R² Nitro ist,
R³,R⁴ unabhängig voneinander jeweils Hydroxy oder Amino,
R⁵ Wasserstoff, C₁-C₄-Alkyl, Hydroxysulfonyl, Sulfamoyl, Mono- oder Di-C₁-C₄-alkylsulfamoyl, C₁-C₄-Alkylsulfonyl, C₁-C₄-Alkoxysulfonyl oder Carboxyl,
R⁶ Wasserstoff oder C₁-C₄-Alkyl,
R⁷ Wasserstoff, Hydroxysulfonyl, Sulfamoyl, Mono- oder Di-C₁-C₄-alkylsulfamoyl, C₁-C₄-Alkylsulfonyl, C₁-C₄-Alkoxysulfonyl, SO₂N(CH₂COOH)₂ oder Carboxyl,
R⁸ Wasserstoff, Hydroxy, C₁-C₄-Alkoxy, Halogen oder Nitro,
mit der Maßgabe, daß mindestens einer der beiden Reste R⁵ und R⁷ COOH oder SO₃H bedeuten, wobei, wenn R⁵ oder R⁷ für SO₃H steht, der andere dieser beiden Reste COOH oder R³ und/oder R⁴ Amino oder R¹ Wasserstoff oder R⁶ Alkyl bedeuten.

2. Trisazofarbstoffe der Formel I nach Anspruch 1, in denen R¹ für Nitro und R² für Nitro oder Wasserstoff steht.

3. Trisazofarbstoffe der Formel I nach Anspruch 1, in denen R⁵ für COOH, SO₃H, Methyl oder Wasserstoff steht.

4. Trisazofarbstoffe der Formel I nach Anspruch 1, in denen R⁶ für Wasserstoff oder Methyl steht.

5. Trisazofarbstoffe der Formel I nach Anspruch 1, in denen R⁷ für SO₃H oder COOH steht.

6. Trisazofarbstoffe der Formel I nach Anspruch 1, in denen R⁵ oder R⁷ für COOH steht.

7. Trisazofarbstoffe der Formel I nach Anspruch 1, in denen R⁸ für Wasserstoff oder Hydroxy steht.

8. Trisazofarbstoffe der Formel I nach Anspruch 1, als Kupfer-, Chrom-, Eisen-, Kobalt-, oder Nickelkomplexe.

9. Trisazofarbstoffe der Formel I nach Anspruch 1 als Eisenkomplexe.

10. Verwendung der Trisazofarbstoffe gemäß Anspruch 1 zum Färben von Leder, Textilfasern oder Papier.

## Revendications

1. Colorants trisazoïques de formule générale I 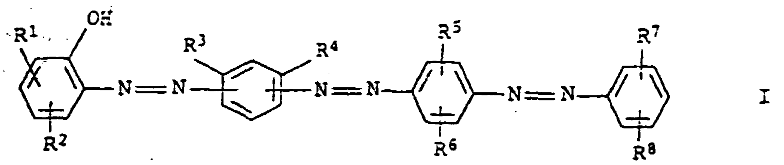 sous forme libre ou sous forme de leurs sels de métaux ainsi qu'en tant que complexes de métaux de transition, où les variables prennent les significations suivantes :
R¹ représente un atome d'hydrogène, un groupement alkyle en C₁-C₄, un atome d'halogène, un groupement nitro, hydroxysulfonyle, sulfamoyle, mono- ou di(alkyle en C₁-C₄)sulfamoyle, alkylsulfonyle en C₁-C₄ ou alcoxysulfonyle en C₁-C₄,
R² représente un atome d'hydrogène, un atome d'halogène, un groupement nitro ou hydroxysulfonyle, où au moins un des restes R¹ ou R² est un groupement nitro,
R³, R⁴ représentent chacun indépendamment l'un de l'autre un groupement hydroxy ou amino,
R⁵ représente un atome d'hydrogène, un groupement alkyle en C₁-C₄, hydroxysulfonyle, sulfamoyle, mono- ou di(alkyle en C₁-C₄)sulfamoyle, alkylsulfonyle en C₁-C₄, alcoxysulfonyle en C₁-C₄ ou carboxyle,
R⁶ représente un atome d'hydrogène ou un groupement alkyle en C₁-C₄,
R⁷ représente un atome d'hydrogène, un groupement hydroxysulfonyle, sulfamoyle, mono- ou di(alkyle en C₁-C₄)sulfamoyle, alkylsulfonyle en C₁-C₄, alcoxysulfonyle en C₁-C₄, SO₂N(CH₂COOH)₂ ou carboxyle,
R⁸ représente un atome d'hydrogène, un groupement hydroxy, alcoxy en C₁-C₄, un atome d'halogène ou un groupement nitro,
étant spécifié qu'au moins un des deux restes R⁵ et R⁷ représente COOH ou SO₃H, où, lorsque R⁵ ou R⁷ est mis pour SO₃H, l'autre de ces deux restes représente COOH ou bien R³ et/ou R⁴ représentent un groupement amino ou bien R¹ représente un atome d'hydrogène ou bien R⁶ représente un groupement alkyle.

2. Colorants trisazoïques de formule I selon la revendication 1, dans lesquels R¹ est mis pour un groupement nitro et R² pour un groupement nitro ou un atome d'hydrogène.

3. Colorants trisazoïques de formule I selon la revendication 1, dans lesquels R⁵ est mis pour COOH, SO₃H, un groupement méthyle ou un atome d'hydrogène.

4. Colorants trisazoïques de formule I selon la revendication 1, dans lesquels R⁶ est mis pour un atome d'hydrogène ou un groupement méthyle.

5. Colorants trisazoïques de formule I selon la revendication 1, dans lesquels R⁷ est mis pour SO₃H ou COOH.

6. Colorants trisazoïques de formule I selon la revendication 1, dans lesquels R⁵ ou R⁷ est mis pour COOH.

7. Colorants trisazoïques de formule I selon la revendication 1, dans lesquels R⁸ est mis pour un atome d'hydrogène ou un groupement hydroxy.

8. Colorants trisazoïques de formule I selon la revendication 1, en tant que complexes du cuivre, du chrome, du fer, du cobalt ou du nickel.

9. Colorants trisazoïques de formule I selon la revendication 1, en tant que complexes du fer.

10. Utilisation de colorants trisazoïques selon la revendication 1 pour la coloration du cuir, des fibres textiles ou du papier.

## Claims

1. Trisazo dyes of the general formula I 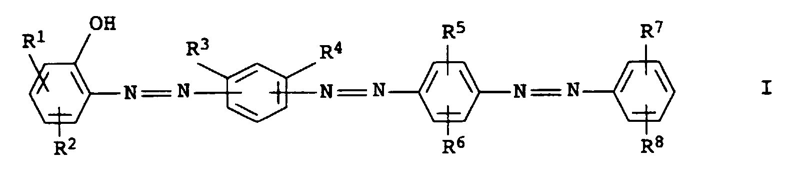 where
R¹ is hydrogen, C₁-C₄-alkyl, halogen, nitro, hydroxysulfonyl, sulfamoyl, mono- or di-C₁-C₄-alkylsulfamoyl, C₁-C₄-alkylsulfonyl or C₁-C₄-alkoxysulfonyl,
R² is hydrogen, halogen, nitro or hydroxysulfonyl, at least one of R¹ and R² being nitro,
R³ and R⁴ are each independently of the other hydroxyl or amino,
R⁵ is hydrogen, C₁-C₄-alkyl, hydroxysulfonyl, sulfamoyl, mono- or di-C₁-C₄-alkylsulfamoyl, C₁-C₄-alkylsulfonyl, C₁-C₄-alkoxysulfonyl or carboxyl,
R⁶ is hydrogen or C₁-C₄-alkyl,
R⁷ is hydrogen, hydroxysulfonyl, sulfamoyl, mono- or di-C₁-C₄-alkylsulfamoyl, C₁-C₄-alkylsulfonyl, C₁-C₄-alkoxysulfonyl, SO₂N(CH₂COOH)₂ or carboxyl,
R⁸ is hydrogen, hydroxyl, C₁-C₄-alkoxy, halogen or nitro,
with the proviso that at least one of R⁵ and R⁷ is COOH or SO₃H and when R⁵ or R⁷ is SO₃H the other is COOH, or R³ and/or R⁴ are each amino or R¹ is hydrogen or R⁶ is alkyl,
in free form or in the form of their metal salts and also as transition metal complexes.

2. Trisazo dyes of the formula I as claimed in claim 1, wherein R¹ is nitro and R² is nitro or hydrogen.

3. Trisazo dyes of the formula I as claimed in claim 1, wherein R⁵ is COOH, SO₃H, methyl or hydrogen.

4. Trisazo dyes of the formula I as claimed in claim 1, wherein R⁶ is hydrogen or methyl.

5. Trisazo dyes of the formula I as claimed in claim 1, wherein R⁷ is SO₃H or COOH.

6. Trisazo dyes of the formula I as claimed in claim 1, wherein R⁵ or R⁷ is COOH.

7. Trisazo dyes of the formula I as claimed in claim 1, wherein R⁸ is hydrogen or hydroxyl.

8. Trisazo dyes of the formula I as claimed in claim 1, as copper, chromium, iron, cobalt or nickel complexes.

9. Trisazo dyes of the formula I as claimed in claim 1, as iron complexes.

10. The use of the trisazo dyes of claim I for dyeing leather, textile fibers or paper.
